# EUROPÄISCHE PATENTANMELDUNG

(11) **EP 0 818 483 A1**
(43) Veröffentlichungstag der Anmeldung: **14.01.1998**
(21) Anmeldenummer: 97108064.3
(22) Anmeldetag: 17.05.1997
(51) Int. Cl.: C08G 18/79, C09J 175/04

(54) **Wärmehärtender abspalt- und lösemittelfreier Einkomponenten-Klebstoff auf Basis von Polyurethanen sowie deren Verwendung**

(30) Priorität: 13.07.1996 DE 19628328
(71) Anmelder: HÜLS AKTIENGESELLSCHAFT, 45764 Marl (DE)
(72) Erfinder: Wenning, Andreas, Dr., 48301 Nottuln (DE); Schmitt, Felix, Dr., 45701 Herten (DE)

(57) **Zusammenfassung**

Die Erfindung betrifft Verbindungen, enthaltend
A) eine Härterkomponente, bestehend aus hydroxyl- und uretdiongruppenhaltigen Polyadditionsprodukten,
B) eine Bindemittelkomponente, bestehend aus hydroxylgruppenhaltigen Verbindungen,
   und gegebenenfalls
C) aus der Klebstofftechnologie bekannte Hilfs- und Zusatzmittel.

Ferner betrifft die Erfindung die Herstellung dieser Verbindungen und deren Verwendung als wärmehärtende, einkomponentige, abspalt- und lösemittelfreie Polyurethan (PUR)-Klebstoffe.

## Beschreibung

Die Erfindung betrifft die Verwendung hydroxyl- und uretdiongruppenhaltiger Polyadditionsprodukte zur Herstellung abspaltfreier Polyurethan (PUR)-Klebstoffe und die danach hergestellten, einkomponentigen Klebstoffe.

Polyurethanklebstoffe zeichnen sich generell durch sehr gute Haftungseigenschaften an den verschiedensten Werkstoffoberflächen, Beständigkeiten gegenüber Lösemitteln, Weichmachern, Fetten, Ölen und Wasser sowie durch die hohe Flexibilität der Klebschichten auch bei tiefen Temperaturen aus. Aufgrund der Vielseitigkeit der Polyurethanchemie kennt die Literatur - siehe z. B. G. Habenicht, Kleben - Grundlagen, Technologie, Anwendungen, Springer Verlag, Berlin, Heidelberg, New York, Tokyo, 1986 - eine Anzahl unterschiedlicher Typen von Polyurethan-Klebstoffen. Es werden Ein- und Zweikomponentensysteme unterschieden. Zweikomponentige Polyurethan-Klebstoffe sind im wesentlichen charakterisiert durch Polyisocyanate als Härter sowie vorwiegend oligomere Diole bzw. Polyole als Harz. Sie haben den Vorteil, daß sie hinsichtlich Lagerstabilität unkritisch sind und daß sich durch gezielte Auswahl und Reaktivität der Monomere Systeme mit unterschiedlichen Topfzeiten einstellen und klebschichtbestimmende Eigenschaften wie z. B. Festigkeit, Elastizität und Beständigkeit gegenüber chemischen Einflüssen steuern lassen. Aufgrund von Polyadditionsreaktionen werden bei diesen Klebstoffen während der Vernetzung keine Abspaltprodukte freigesetzt.

Der für die Verarbeitung von Zweikomponentensystemen erforderliche technische Aufwand hinsichtlich genauer Dosierung und Mischung der Komponenten hat dazu geführt, einfacher zu verarbeitende Einkomponentensysteme zu entwickeln. Sie enthalten Isocyanatoprepolymere, die aus höhermolekularen Polyolen mit einem stöchiometrischen Überschuß an Polyisocyanat hergestellt werden. Die Aushärtung geschieht zumeist durch Feuchtigkeitsvernetzung. Aus diesem Grund ist eine ausreichende Luftfeuchtigkeit (mindestens 40 % rel. F.) in den Verarbeitungsräumen erforderlich. Für Verklebungen metallischer oder anderer für Feuchtigkeit undurchlässiger Fügeteile sind diese Klebstoffe daher nur bedingt einsetzbar. An die Verpackung dieser Einkomponenten-Klebstoffe müssen während Transport und Lagerung wegen des Feuchtigskeitsausschlusses hohe Anforderungen gestellt werden.

Eine Weiterentwicklung sind die nachvernetzenden Polyurethan-Schmelzklebstoffe (reaktive Hot Melts), die nach Applikation aus der Schmelze nach Abkühlung (physikalisch abbindend) eine spontane Anfangsfestigkeit bringen und anschließend durch Einwirkung weiterer Umgebungsluftfeuchtigkeit auf die noch vorhandenen reaktionsfähigen Isocyanatgruppen zum Klebschichtpolymer vernetzen.

Kritisch kann bei der Vernetzungsreaktion mittels Feuchtigkeit die Bildung von Kohlendioxid durch den Zerfall der instabilen Carbaminsäurederivate sein, vor allem dann, wenn dickere Klebstoffschichten mit höheren Viskositäten vorliegen und die Gasblasen in der Klebschicht eingeschlossen werden. Außerdem erreichen feuchtigkeitshärtende PUR-Klebstoffe nicht die Festigkeiten wie Zweikomponenten-PUR-Klebstoffe.

Eine Alternative zu den feuchtigkeitshärtenden Systemen stellen einkomponentige thermisch aktivierbare PUR-Klebstoffe dar. Sie bestehen aus Polyolharzen und Polyisocyanaten, deren Isocyanatgruppen durch sogenannte Blockierungsmittel inhibiert sind. Erhöhte Temperaturen führen zu einer Spaltung der Härtermoleküle. Dabei werden die Blockierungsmittel abgespalten, und durch Polyurethanbildung wird das Polymer generiert. Nachteilig ist auch hier die Bildung von Abspaltprodukten in Hinsicht auf Verschlechterung der Klebeigenschaften. Darüber hinaus sind die Blockierungsmittel aufgrund ihrer organischen Struktur toxikologisch z. T. nicht unbedenklich.

Polyurethane sind ebenfalls als lösungsmittelhaltige Klebstoffsysteme im Einsatz. Hierbei können physikalisch abbindende und chemisch reagierende Systeme unterschieden werden. Beide Systeme besitzen hochmolekulare Hydroxyl-Polyurethane als Polymere, wobei die chemisch reagierenden Systeme zusätzlich noch ein Polyisocyanat als zweite Komponente in dem Lösemittelsystem beinhalten. Zur Ausbildung der Klebschicht, die bei normaler oder höherer Temperatur erfolgen kann, ist die Entfernung des Lösemittels erforderlich.

Aus Umweltschutz- und klebtechnischen Gründen ist es jedoch wünschenswert, Klebstoffe bereitzustellen, die frei von Emissionen in Form von Lösemittel oder Abspaltungsprodukten wie Blockierungsmitteln sind.

Die der Erfindung zugrunde liegende Aufgabe bestand daher darin, neue PUR-Klebstoffe zu entwickeln, die nicht mit den genannten Nachteilen des Standes der Technik behaftet sind, d. h. die einkomponentig, blockierungsmittel- und lösemittelfrei sind und sich thermisch zu Duromeren vernetzen lassen.

Diese Aufgabe wurde gemäß der Patentansprüche gelöst. Nachfolgend wird die erfindungsgemäße Harz/Härter-Mischung, die als Härtungsmittel hydroxyl- und uretdiongruppenhaltige Polyadditionsprodukte enthält, beschrieben.

Gegenstand der vorliegenden Erfindung sind somit wärmehärtende, einkomponentige, abspalt- und lösemittelfreie Klebstoffe auf Basis von Polyurethanen. Sie bestehen aus
A) einer Härterkomponente, aus hydroxyl- und uretdiongruppenhaltigen Polyadditionsprodukten, und
B) einer Bindemittelkomponente, aus hydroxylgruppenhaltigen Verbindungen, und enthalten gegebenenfalls
C) aus der Klebstofftechnologie bekannte Hilfs- und Zusatzmittel.

Die Härterkomponente A) ist erhältlich durch Umsetzung von
(i) Uretdionen auf Basis von Polyisocyanaten, insbesondere auf Basis aliphatischer und/oder cycloaliphatischer Diisocyanate mit mindestens zwei freien Isocyanatgruppen und
(ii) gegenüber Isocyanatgruppen reaktiven, difunktionellen und gegebenenfalls monofunktionellen Verbindungen, insbesondere Diolen und/oder Kettenverlängerern sowie gegebenenfalls Monoalkoholen oder Monoaminen,
   wobei die uretdiongruppenhaltigen Polyadditionsprodukte sowohl im Lösemittel als auch insbesondere lösemittelfrei dargestellt werden können,
die Bindemittelkomponente B) besteht aus hydroxylgruppenhaltigen Verbindungen mit einer Molmasse von mindestens 60, einer OH-Zahl von mindestens 20 mg KOH/g und einer Hydroxylfunktionalität von mindestens 2.

Das Mischungsverhältnis der hydroxylgruppenhaltigen Verbindungen und den hydroxyl- und uretdiongruppenhaltigen Polyadditionsprodukten (Vernetzern) wird im allgemeinen so gewählt, daß auf eine OH-Gruppe 0,5 bis 1,2, bevorzugt 0,8 bis 1,1 ganz besonders bevorzugt 1,0 NCO-Gruppe kommt.

Gegenstand der Erfindung ist auch ein Verfahren zur Herstellung dieser wärmehärtenden, einkomponentigen, abspalt- und lösemittelfreien Polyurethane, bestehend aus
A) einer Härterkomponente, aus hydroxyl- und uretdiongruppenhaltigen Polyadditionsprodukten,
B) einer Bindermittelkomponente, aus hydroxylgruppenhaltigen Verbindungen. Gegebenenfalls enthalten die erfindungsgemäßen Polymeren
C) aus der Klebstofftechnologie bekannte Hilfs- und Zusatzmittel, der genannten Art.

Weiterhin Gegenstand der Erfindung ist die Verwendung der erfindungsgemäßen Polyurethane als wärmehärtende, einkomponentige, abspalt- und lösemittelfreie Klebstoffe zur Verklebung von beliebigen hitzeresistenten Substraten, insbesondere zur Verklebung von Metallen.

Bei der Härterkomponente A) handelt es sich um Uretdiongruppen aufweisende Polyadditionsverbindungen. Die Uretdionprodukte, die zusätzlich zu den Uretdionen noch bis zu 40 Massen-% Trimere und höhere Oligomere enthalten können, basieren auf den Umsetzungsprodukten der Dimerisierung von Polyisocyanaten, besonders auf die Dimerisierungsprodukte aliphatischer und/oder cycloaliphatischer Diisocyanate. Als Diisocyanate kommen insbesondere 1,6-Diisocyanatohexan (HDI), 3-Methyl-1,5-diisocyanatopentan (MPDI), 2,2,4- bzw. 2,4,4-Trimethyldiisocyanatohexan (TMDI), 1-Isocyanato-3-isocyanatomethyl-3,5,5-trimethylcyclohexan (IPDI) und 4,4'-Diisocyanatodicyclohexylmethan (H₁₂MDI) oder beliebige Gemische dieser Diisocyanate zum Einsatz.

Die Herstellung solcher Uretdiongruppen aufweisender Polyadditionsverbindungen durch Umsetzung Uretdiongruppen aufweisender Polyisocyanate mit gegenüber Isocyanatgruppen reaktiven, difunktionellen und gegebenenfalls monofunktionellen Verbindungen, insbesondere Diolen und/oder Kettenverlängerern sowie gegebenenfalls Monoalkoholen oder Monoaminen ist prinzipiell bekannt und wird beispielsweise in den DE-PS 24 20 475, DE-PS 30 30 572, DE-PS 30 30 588, DE-PS 30 30 539, EP-PS 0 669 353 und EP-PS 0 669 354 beschrieben. Die als Harter verwendeten Uretdiongruppen aufweisenden Polyadditionsverbindungen weisen im allgemeinen einen Gesamt-NCO-Gehalt von 3 bis 26 % (ermittelt durch 30 bis 60 minütiges Erhitzen der Verbindungen auf 180 °C) auf Dieser sogenannte "Heißwert" ist ein direktes Maß für den Gehalt an Uretdiongruppen im Reaktionsprodukt. Der Schmelzpunkt dieser Verbindungen liegt im allgemeinen innerhalb des Bereiches von 40 bis 130 °C.

Als Bindemittelkomponente B) eignen sich Verbindungen mit funktionellen Gruppen, die sich mit Isocyanatgruppen während des Härtungsprozesses in Abhängigkeit von der Temperatur und Zeit umsetzen lassen, z. B. Hydroxyl-, Carboxyl-, Mercapto-, Amino-, Urethan-, (Thio)-Hamstoffgruppen. Als Polymere können Polymerisate, Polykondensate und Polyadditionsverbindungen eingesetzt werden.

Bevorzugte Komponenten sind in erster Linie Polyether, Polythioether, Polyacetale, Polyesteramide, Aminoplaste und ihre Modifizierungsprodukte mit polyfunktionellen Alkoholen, Polyazomethine, Polysulfonamide, Acrylatharze, Melaminabkömmlinge, Celluloseester und -ether, Polyharnstoffe, insbesondere aber Polyole, Polyester und Polyurethane.

Geeignete Polyole sind z. B. Ethylenglykol, Propylengykol-1,2 und -1,3, Butylenglykol-1,4 und -2,3, Di-β-hydroxybutandiol, Hexandiol-1,6, Heptandiol-1,7, Octandiol-1,8, Dodecandiol-1,12, Octadecandiol-1,18, Neopentylglykol, Cyclohexandiol, Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 3-Methylpentandiol-1,5, 2,2,4- bzw. 2,4,4-Trimethylhexandiol-1,6, Glycerin, 1,1,1-Trimethylolpropan, 1,1,1-Trimethylolethan, Hexantriol-1,2,6, Butantriol-1,2,4, Tris-(β-hydroxyethyl)-isocyanurat, Pentaerythrit, Mannit, Sorbit sowie Diethylenglykol, Triethylenglykol, Tetraethylenglykol, Dipropylenglykol, Polypropylenglykole, Polybutylenglykole, Xylylenglykole und Hydroxypivalinsäureneopentylglykolester. Selbstverständlich können auch Gemische mehrerer Polyhydroxylverbindungen eingesetzt werden.

Für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beipiele hierfür seien genannt: Bernstein-, Adipin-, Kork-, Azelain-, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Dodecandi-, Dimerfett-, Glutar-, Malein- und Fumarsäure bzw. - soweit zugänglich - deren Anhydride, Terephthalsäuredimethylester und Terephthalsäure-bis-glykolester.

Als mehrwertige Alkohol-Komponente zur Darstellung der Polyester kommen die vorstehend beispielhaft genannten Polyole in Frage.

Polyester aus Lactonen oder Hydroxycarbonsäuren können ebenfalls eingesetzt werden.

Bei der Herstellung der Polyesterpolyole sind selbstverständlich beliebige Gemische der beispielhaft genannten Carbonsäuren bzw. deren Anhydride oder Ester oder beliebige Gemische der beispielhaft genannten mehrwertigen Alkohole einsetzbar.

Wesentlich im Sinne der Erfindung ist, daß die hydroxylgruppenhaltigen Polyester in der Bindemittelkomponente B) vorzugsweise aus zwei Typen mit unterschiedlichen Charakteristika bestehen können. Bevorzugte Polyester vom Typ I haben eine OH-Funktionalität von 2,0 bis 5,0, vorzugsweise von 2,0 bis 4,0, eine OH-Zahl von 20 bis 200 mg KOH/g, vorzugsweise von 30 bis 150 mg KOH/g, eine Molmasse von 1 500 bis 30 000, vorzugsweise von 2 000 bis 7 000, eine Viskosität bei 130 °C von < 300 000 mPa·s, einem Schmelz- bzw. Fließpunkt bis ca. 230 °C und einer Glasübergangstemperatur (T_{g}) von -80 bis 120 °C. Die Morphologie der Polyester reicht von amorph bis kristallin.

Bevorzugte hydroxylgruppenhaltige Polyester vom Typ II weisen eine OH-Funktionalität von 2,0 bis 5,0, eine OH-Zahl von 100 bis 600 mg KOH/g, vorzugsweise 100 bis 400 mg KOH/g, und eine Molmasse von 100 bis 2 000 auf.

Gegebenenfalls besitzten die Polyester beider Typen noch Säurezahlen bis etwa 35 mg KOH/g.

Die Polyester können in bekannter Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden, wie es z. B. in Houben-Weyl, Methoden der Organischen Chemie, Bd. 14/2, 1-5, 21, 23, 40, 44, Georg Thieme Verlag, Stuttgart, 1963 oder bei C. R. Martens, Alkyd Resins, 51 - 59, Reinhold Plastics Appl. Series, Reinhold Publishing Comp., New York, 1961, beschrieben ist.

Die Polyurethanpolyole sind Umsetzungsprodukte aus
(i) einer Polyisocyanat-Komponente bestehend aus mindestens einem organischen Polyisocyanat mit
(ii) einer Polyol-Komponente bestehend aus mindestens einem 2- bis 6-wertigen Alkohol, der gegebenenfalls Ester-, Ether- und/oder Acrylatbindungen aufweist.

Als Polyisocyanat (i) kommen sowohl aromatische als auch insbesondere (cyclo)aliphatische Diisocyanate wie 1,6-Diisocyanatohexan (HDI), 3-Methyl-1,5-diisocyanatopentan (MPDI), 2,2,4- bzw. 2,4,4-Trimethyldiisocyanatohexan (TMDI), 1-Isocyanato-3-isocyanatomethyl-3,5,5-trimethylcyclohexan (IPDI) und 4,4'-Diisocyanatodicyclohexylmethan (H₁₂MDI) in Betracht. Auch eine Molekülvergrößerung der beispielhaft genannten Polyisocyanate durch Dimerisierung, Trimerisierung, Carbodiimidisierung, Allophanatbildung und Biuretisierung, wie sie z. B. in der DE-OS 29 29 150 beschrieben wird, ist möglich. Selbstverständlich können bei der Herstellung der Polyurethanpolyole beliebige Gemische der beispielhaft genannten Polyisocyanate eingesetzt werden.

Typische Beispiele mehrwertiger Alkohole (ii) ohne zusätzliche funktionelle Gruppen sind z. B. Ethylenglykol, Propylengykol-1,2 und -1,3, Butylenglykol-1,4 und -2,3, Di-β-hydroxybutandiol, Hexandiol-1,6, Heptandiol-1,7, Octandiol-1,8, Dodecandiol-1,12, Octadecandiol-1,18, Neopentylglykol, Cyclohexandiol, Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 3-Methylpentandiol-1,5, 2,2,4- bzw. 2,4,4-Trimethylhexandiol-1,6, Glycerin, 1,1,1-Trimethylolpropan, 1,1,1-Trimethylolethan, Hexantriol-1,2,6, Butantriol-1,2,4, Tris-(β-hydroxyethyl)-isocyanurat, Pentaerythrit, Mannit, Sorbit sowie Diethylenglykol, Triethylenglykol, Tetraethylenglykol, Dipropylenglykol, Polypropylenglykole, Polybutylenglykole, Xylylenglykole und Hydroxypivalinsäureneopentylglykolester. Selbstverständlich können auch Gemische mehrerer Polyhydroxylverbindungen eingesetzt werden.

Beispiele geeigneter Polyesterpolyole (ii) sind insbesondere die in der Polyurethanchemie an sich bekannten Umsetzungsprodukte von mehrwertigen Alkoholen der vorstehend genannten Art mit Polycarbonsäuren. Geeignete Polycarbonsäuren können aliphatischer, cycloaliphatischer, aromatischer und/oder heterocyclischer Natur sein und gegebenenfalls durch Halogenatome substituiert und/oder ungesättigt sein- Als Beipiele hierfür seien genannt: Bernstein-, Adipin-, Kork-, Azelain-, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Dodecandi-, Dimerfett-, Glutar-, Malein- und Fumarsäure bzw. - soweit zugänglich - deren Anhydride, Terephthalsäuredimethylester und Terephthalsäure-bis-glykolester. Polyester in Form von Lactonen oder Hydroxycarbonsäuren können ebenfalls eingesetzt werden. Bei der Herstellung der Polyesterpolyole sind selbstverständlich beliebige Gemische der beispielhaft genannten mehrwertigen Alkohole oder beliebige Gemische der beispielhaft genannten Carbonsäuren bzw. deren Anhydride oder Ester einsetzbar.

Geeignete Polyetherpolyole (ii) sind die aus der Polyurethanchemie an sich bekannten Ethoxylierungs- und/oder Propoxylierungsprodukte geeigneter 2- bis 4-wertiger Startermoleküle wie z. B. Wasser, Ethylenglykol, Propylenglykol-1,2 und -1,3, 1,1,1-Trimethylolpropan, Glycerin und/oder Pentaerythrit.

Bei den Polyhydroxypolyacrylaten (ii) handelt es sich um an sich bekannte Mischpolymerisate von einfachen Estern der Acrylsäure und/oder Methacrylsäure und gegebenenfalls Styrol, wobei zwecks Einführung der Hydroxylgruppen Hydroxyalkylester, wie beispielsweise die 2-Hydroxyethyl-, 2-Hydroxypropyl-, 2-, 3-, 4-Hydroxybutylester, dieser Säuren mitverwendet werden.

Die Polyhydroxypolyester, wie oben beschrieben, Polyhydroxypolyether und Polyhydroxypolyacrylate weisen im allgemeinen eine Hydroxylzahl von 20 bis 200 mg KOH/g auf, vorzugsweise von 50 bis 130 mg KOH/g, bezogen auf 100%ige Produkte.

Die Herstellung der Polyurethanpolyole erfolgt vorzugsweise in inerten Lösemitteln, wie z. B. Ketonen, bei Temperaturen von 20 bis 90 °C. Die Mengen der Reaktionspartner entsprechen dabei im allgemeinen einem NCO/OH-Verhältnis von 1 : 1,4 bis 1 : 15.

Die beispielhaft genannten Polyole und hydroxylgruppenhaltigen Polyester und Polyurethane können in beliebigen Verhältnissen miteinander gemischt und mit der Härterkomponente A) umgesetzt werden.

Bei der Herstellung der erfindungsgemäßen Klebstoffe können erforderlichenfalls die im Klebstoffsektor üblichen Hilfs- und Zusatzmittel, wie Katalysatoren, Haftvermittler, Haftharze, Verlaufsmittel, Füllstoffe, Pigmente, Farbstoffe, UV- und Oxidationsstabilisatoren Verwendung finden.

Die Härterkomponente A) wird für die Herstellung der erfindungsgemäßen PUR-Klebstoffe mit den hydroxylgruppenhaltigen Polymeren und gegebenenfalls Katalysatoren sowie weiteren Hilfs- und Zusatzmitteln entweder in einem inerten Lösemittel, wie z. B. Aceton, homogenisiert oder nach dem Mahlen gemischt und in der Schmelze homogenisiert. Bei einer Homogenisierung im Lösemittel wird das Lösemittel destillativ im Vakuum entfernt. Das erhaltene Produkt wird nun mit einer Mühle auf eine Korngröße kleiner 500 µm gemahlen. Die Homogenisierung in der Schmelze kann in geeigneten Aggregaten, wie z. B. beheizbaren Knetern, vorzugsweise jedoch durch Extrudieren, erfolgen, wobei Temperaturobergrenzen von 180 °C nicht überschritten werden sollten. Die geknetete bzw. extrudierte Masse wird nach Abkühlen auf Raumtemperatur geeignet zerkleinert und mit einer Mühle kleiner 500 µm gemahlen.

Die Applikation des einkomponentigen Klebstoffs auf die zu verklebenden Substrate kann z. B. durch elektrostatisches Pulversprühen, Wirbelsintern, elektrostatisches Wirbelsintern, Aufschmelzen oder Aufsieben erfolgen. Nach dem Auftrag der erfindungsgemäßen Klebstofformulierung auf die gereinigten Oberflächen der Fügeteile wird die Verklebung gegebenenfalls z. B. mit geeigneten Werkzeugen oder einem Gewicht fixiert. Die Aushärtung der beschichteten Werkstücke erfolgt bei 150 bis 220 °C innerhalb von 60 bis 4 Minuten, vorzugsweise 160 bis 200 °C innerhalb von 30 bis 6 Minuten.

Die erfindungsgemäßen Harz/Härter-Systeme können z. B. als Beschichtungsmittel für unterschiedliche Substrate oder bevorzugt als Klebstoff, insbesondere als einkomponentige PUR-Klebstoffe zum Verkleben verschiedenster Werkstoffe, z. B. Metalle, Leichtmetalle, aber auch nichtmetallische Werkstoffe wie Glas, Keramik oder Kunststoff verwendet werden. Die verwendeten Substrate müssen hitzebeständig sein.

Die erfindungsgemäßen wärmehärtenden PUR-Klebstoffe ergeben Verklebungen mit ausgezeichneter Zugscherfestigkeit bei variabel einstellbarer Flexibilität. Die Klebstoffe sind ökologisch äußerst vorteilhaft, da sie lösemittelfrei sind und bei der Härtung keine Abspaltprodukte freisetzen.

Nachfolgend wird der Gegenstand der Erfindung anhand von Beispielen näher erläutert.

Die in den Beispielen verwendeten Abkürzungen haben die nachstehend wiedergegebenen Bedeutungen:
- As: = Adipinsäure
- DMPS: = Dimethylolpropionsäure
- EG: = Ethylenglykol
- HD: = 1,6-Hexandiol
- IPS: = Isophthalsäure
- NPG: = Neopentylglykol(2,2-Dimethylpropandiol-1,3)
- P: = Pentandiol-1,5
- PSA: = Phthalsäureanhydrid
- TMA: = Trimellitsäureanhydrid
- TMHD: = Trimethylhexandiol
- TMP: = 1,1,1-Trimethylolpropan
- TPS: = Terephthalsäure

### A) Herstellung der hydroxyl- und uretdiongruppenhaltigen Polyadditionsprodukte

Die Produktion der hydroxyl- und uretdiongruppenhaltigen Polyadditionsprodukte erfolgt nach bekanntem Verfahren.
Die physikalischen und chemischen Kenndaten der als Härter verwendeten Verbindungen sowie deren molaren Zusammensetzungen sind in der Tabelle 1 zusammengefaßt. Das als Beispiel für Uretdione nach bekanntem Verfahren hergestellte IPDI-Uretdion hat folgende NCO-Kenndaten:

| | |
|---|---|
| frei: | 16,8 bis 18,5 Massen-% |
| gesamt: | 37,5 bis 37,8 Massen-% |

Der als Beispiel aufgeführte Kettenverlängerer aus 1 mol Adipinsäure und 2 mol Neopentylgykol weist eine OH-Zahl von 335 ± 15 mg KOH/g und eine Viskosität bei 25 °C von ca. 1 500 mPa·s auf.

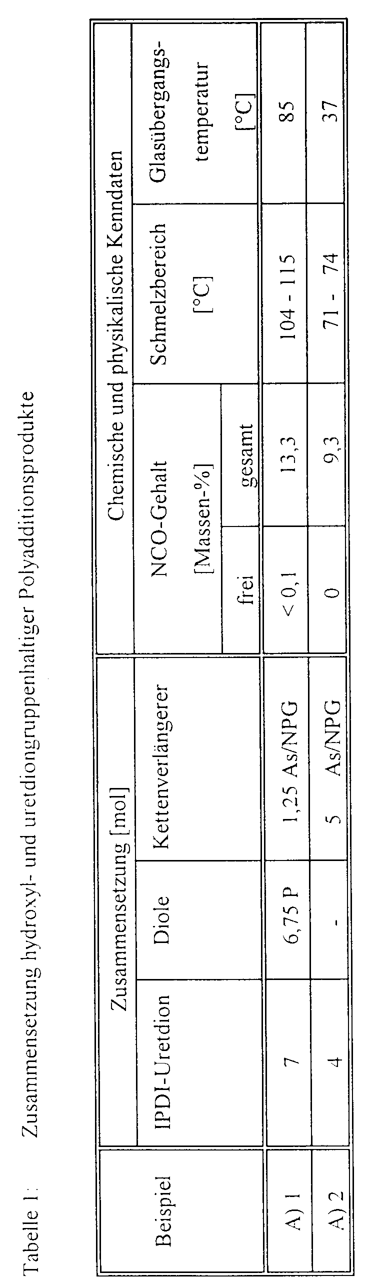

### B) Hydroxylgruppenhaltige Verbindungen

Die folgende Tabelle 2 gibt einen Überblick über die zur Formulierung von PUR-Klebstoffen eingesetzten Polyole, hydroxylgruppenhaltigen Polyester und Polyurethane.

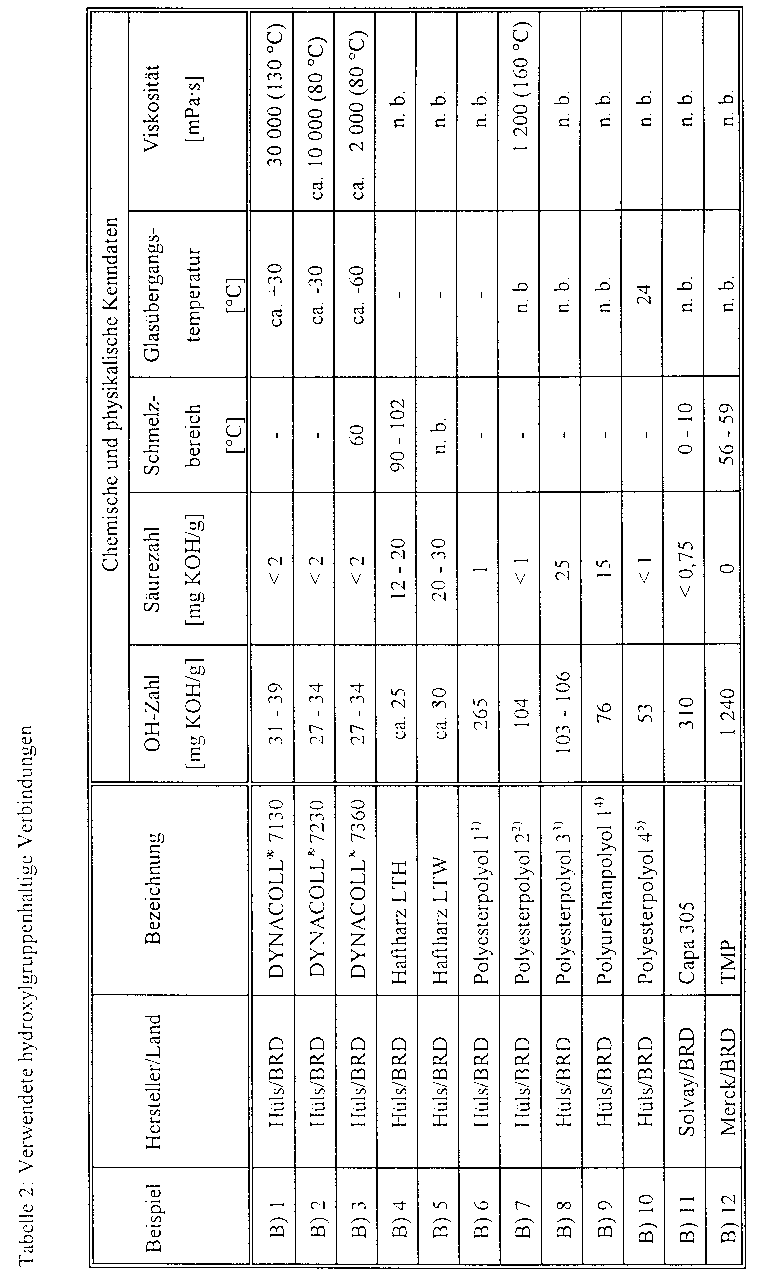

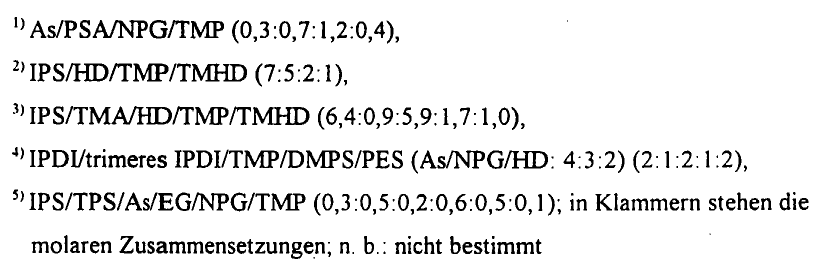

### C) Polyurethan-Klebstoffe

### Allgemeine Herstellungsvorschrift der erfindungsgemäßen Klebstoffe im Lösemittel

Die hydroxyl- und uretdiongruppenhaltigen Polyadditionsprodukte, hydroxylgruppenhaltige Verbindungen und gegebenenfalls Katalysatoren, Hilfs- und Zusatzstoffe werden in einem inerten Lösemittel wie z. B. Aceton gelöst. Nach dem Erhalt einer homogenen Lösung wird das Lösemittel im Vakuum entfernt, der Feststoff zerkleinert und in einer Mühle auf eine Korngröße < 500 µm gemahlen. Es schließt sich eine Nachtrocknung der Substanz bis zur Gewichtskonstanz an.

### Allgemeine Herstellungsvorschrift der erfindungsgemäßen Klebstoffe in der Schmelze

Härter und Harze werden - gegebenenfalls mit Katalysator, Hilfs- und Zusatzstoffen - in einem Plastographen bei 70 bis 130 °C geknetet. Das abgekühlte Feststoffgemisch wird nachfolgend auf eine Korngröße < 500 µm gemahlen.

Bei einer Homogenisierung im Extruder werden die hydroxyl- und uretdiongruppenhaltigen Polyadditionsverbindungen in die Einzugsgehäuse eines Doppelschneckenextruders mit einer Temperatur von 25 bis 170 °C eingespeist, wobei gleichzeitig die Polyol-Komponente mit einer Temperatur von 25 bis 170 °C zudosiert wird. Das Uretdion bzw. die Polyolkomponente enthält gegebenenfalls die erforderliche Katalysatormenge bezogen auf das Endprodukt.

Der eingesetzte Extruder setzt sich aus zehn Gehäusen, die über fünf Heizzonen einzeln thermisch gesteuert werden, zusammen. Die Temperaturen der Heizzonen unterliegen einem großen Temperaturbereich von 50 bis 180 °. Alle Temperaturen sind Soll-Temperaturen, die Regelung in den Gehäusen erfolgt durch elektrische Heizung und pneumatische Kühlung. Das Düsenelement wird mittels Ölthermostat beheizt. Die Drehzahl der Doppelschnecke, aufgebaut mit Förder- und gegebenenfalls Knetelementen, liegt zwischen 50 und 380 Upm.
Die Mischung fällt in einer Menge von 1 bis 130 kg/h an. Es wird entweder abgekühlt, anschließend zerkleinert oder formiert und abgesackt oder bereits die Schmelze formiert, abgekühlt und abgesackt. Das gebrochene Extrudat wird auf einer Mühle auf eine Korngröße < 500 µm gemahlen.

### Applikation der erfindungsgemäßen Klebstoffe

Die erfindungsgemaßen Klebstofformulierungen werden auf die entfetteten und aufgerauhten Normalstahlbleche (St 1405) aus der Schmelze appliziert.
Alternativen dazu stellen das Aufsieben der Verbindungen, das elektrostatische Pulverspritzen, das Wirbelsintern und das elektrostatische Wirbelsintern dar.

Die Verklebungen werden nach der DIN EN 1465 durchgeführt. Die Zugscherfestigkeiten dieser bei unterschiedlichen Temepraturen in einem Umlufttrockenschrank gehärteten Metallverklebungen sind in der Tabelle 3 aufgeführt.

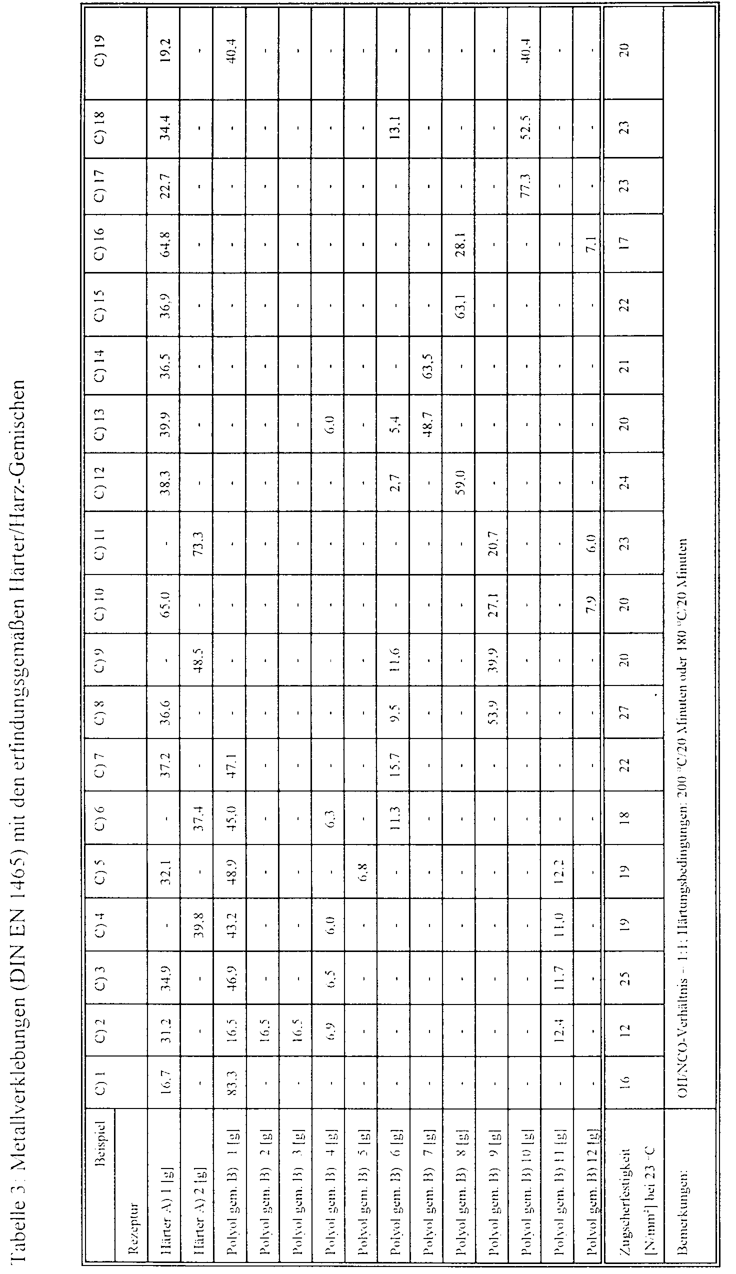

## Patentansprüche

1. Wärmehärtender Einkomponenten-Klebstoff auf Basis von Polyurethanen mit gegebenenfalls aus der Klebstofftechnologie bekannten Hilfs- und Zusatzmitteln,
dadurch gekennzeichnet,
daß der Klebstoffeine Mischung aus
A) einer Härterkomponente, bestehend aus hydroxyl- und uretdiongruppenhaltigen Polyadditionsverbindungen und
B) einer Bindermittelkomponente, bestehend aus hydroxylgruppenhaltigen Verbindungen,
enthält.

2. Einkomponenten-Klebstoff nach Anspruch 1,
dadurch gekennzeichnet,
daß die Härterkomponente A) erhältlich ist durch Umsetzung von (i) Uretdionen aus Basis von Polyisocyanaten mit mindestens zwei freien Isocyanatgruppen und (ii) gegenüber Isocyanatgruppen reaktiven, difunktionellen und gegebenenfalls monofunktionellen Verbindungen.

3. Einkomponenten-Klebstoff nach einem der vorherigen Ansprüche,
dadurch gekennzeichnet,
daß als Polyisocyanate zur Herstellung der Härterkomponente A) aliphatische und/oder cycloaliphatische Diisocyanate eingesetzt werden.

4. Einkomponenten-Klebstoff nach einem der vorherigen Ansprüche,
dadurch gekennzeichnet,
daß als Polyisocyanat zur Herstellung der Härterkomponente A) das Uretdion des Isophorondiisocyanates (IPDI) eingesetzt wird.

5. Einkomponenten-Klebstoff nach einem der vorherigen Ansprüche,
dadurch gekennzeichnet,
daß als gegenüber Isocyanatgruppen reaktiven Verbindungen zur Herstellung der Härterkomponente A) Diole und/oder Kettenverlängerer sowie Monoalkohole und/oder Monoamine eingesetzt werden.

6. Einkomponenten-Klebstoff nach einem der vorherigen Ansprüche,
dadurch gekennzeichnet,
daß als Bindemittelkomponente B) hydroxylgruppenhaltige Verbindungen mit einer Molmasse von mindestens 60, einer OH-Zahl von mindestens 20 mg KOH/g und einer Hydroxylfunktionalität von mindestens 2 eingesetzt werden.

7. Einkomponenten-Klebstoff nach einem der vorherigen Ansprüche,
dadurch gekennzeichnet,
daß als hydroxylgruppenhaltige Verbindungen Polyole, Polyester und Polyurethane eingesetzt werden.

8. Einkomponenten-Klebstoff nach einem der vorherigen Ansprüche,
dadurch gekennzeichnet,
daß ein OH/NCO-Verhältnis von 0,5 bis 1,2 vorliegt.

9. Einkomponenten-Klebstoff nach einem der vorherigen Ansprüche,
dadurch gekennzeichnet
daß den Klebstoffen Katalysatoren zugesetzt werden, bevorzugt organische Zinnverbindungen, in einer Konzentration von 0,01 bis 1 Massen-%, unter Einbeziehung der bereits enthaltenen Katalysatormenge in der Härterkomponente A).

10. Verfahren zur Herstellung von Einkomponenten-Klebstoffen nach einem der vorherigen Ansprüche,
dadurch gekennzeichnet,
daß die Hornogenisierung der Ausgangsprodukte in inerten Lösemitteln, die nach erfolgter Reaktion entfernt werden, oder lösemittelfrei im Kneter, vorzugsweise im Zweiwellenextruder, bei Temperaturen nicht oberhalb von 180 °C erfolgt.

11. Verwendung der Einkomponenten-Klebstoffe nach einem der vorherigen Ansprüche zum Verkleben beliebiger hitzeresistenter Substrate.

12. Verwendung der Einkomponenten-Klebstoffe nach einem der vorherigen Ansprüche zum Verkleben von Metallen.

13. Verwendung der Einkomponenten-Klebstoffe nach einem der vorherigen Ansprüche zum Aufbringen auf Substrate für hitzehätibare Beschichtungen sowie die daraus hergestellten beschichteten hitzegehärteten Substrate.
